# EUROPEAN PATENT APPLICATION

(11) **EP 1 683 644 A1**
(43) Date of publication of application: **26.07.2006**
(21) Application number: 06250178.8
(22) Date of filing: 13.01.2006
(51) Int. Cl.: B41J 11/42

(54) **Conveyer with an encoded surface, method for re-encoding such a conveyer and method for calibrating a conveyer encoder**

(30) Priority: 24.01.2005 US 401782
(71) Applicant: Hewlett-Packard Development Company, L.P., Houston, TX 77070 (US)
(72) Inventor: Thiessen, Kurt, Escondido, CA 92025 (US); Serra, Josep-Maria, San Diego, CA 92103 (US)
(74) Representative: Jehan, Robert

(57) **Abstract**

A conveyer (100) has a belt (110) and an encoded surface (150) that moves with the belt (100) that can be re-encoded.

## Description

The present invention relates to a conveyer, to a method of re-encoding a conveyer and to a method of calibrating a conveyer encoder.

Encoding may be used for coordinating two or more activities. For example, encoding can be used for coordinating the location of an object on a conveyer belt with a device that is going to perform an operation on the object, such as a print head for printing on the object, a robot arm for removing the object from the conveyer, etc. Many encoders include a set number of encoder pulses per unit movement and may be very difficult to recalibrate to account for system variations.

The present invention seeks to provide an improved encoder and conveyer.

According to an aspect of the present invention, there is provided a conveyer as specified in claim 1.

According to another aspect of the present invention, there is provided a method of re-encoding a conveyer as specified in claim 9.

According to another aspect of the present invention, there is provided a method of calibrating a conveyer encoder as specified in claim 15.

Embodiments of the present invention are described below, by way of example only, with reference to the accompanying drawings, in which:
Figures 1A and 1B are respectively side and top views of an embodiment of a conveyer system, according to an embodiment of the present disclosure;
Figure 2A is a top view of an embodiment of a conveyer system, according to another embodiment of the present disclosure;
Figure 2B is a cross-sectional view taken along line 2B-2B of Figure 2A, according to an embodiment of the present disclosure;
Figure 3 illustrates a portion of an embodiment of an encodable strip, according to another embodiment of the present disclosure;
Figure 4 illustrates an embodiment of a roller, according to another embodiment of the present disclosure;
Figure 5 is a block diagram of an embodiment of a control system, according to another embodiment of the present disclosure;
Figure 6 illustrates an embodiment of an imaging system, according to another embodiment of the present disclosure;
Figure 7 a side view showing an embodiment of two print heads printing on an object, according to another embodiment of the disclosure; and
Figure 8 illustrates an embodiment of a calibration set-up, according to another embodiment of the present disclosure.

In the following detailed description of the preferred embodiments, reference is made to the accompanying drawings that form a part hereof, and in which is shown by way of illustration specific embodiments which may be practiced. These embodiments are described in sufficient detail to enable those skilled in the art to practice disclosed subject matter, and it is to be understood that other embodiments may be utilized and that process, electrical or mechanical changes may be made without departing from the scope of the claimed subject matter. The following detailed description is, therefore, not to be taken in a limiting sense, and the scope of the claimed subject matter is defined only by the appended claims and equivalents thereof.

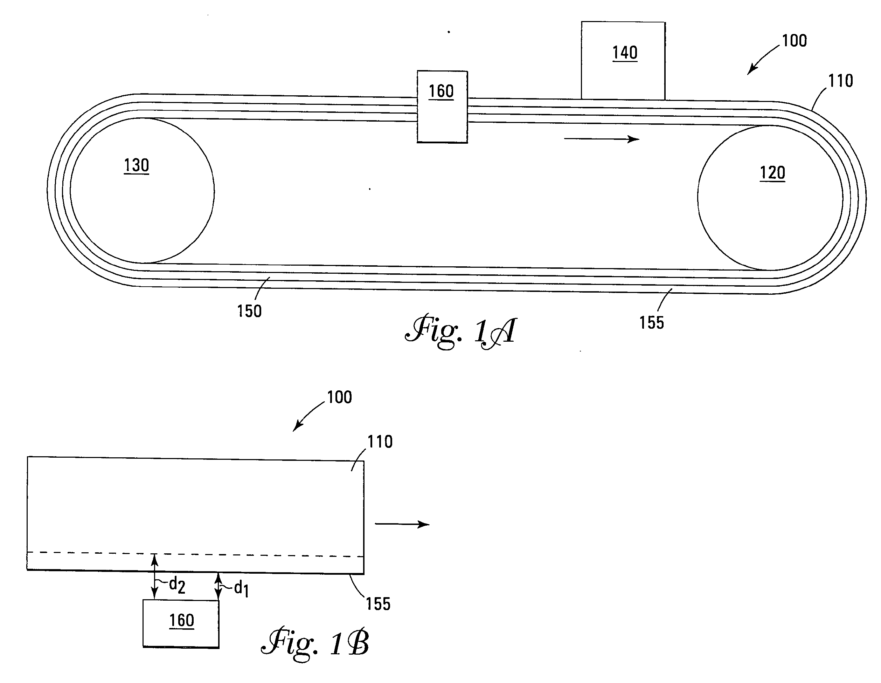

Figures 1A and 1B are respectively side and top views of a conveyer system 100, according to an embodiment. Conveyer system 100 includes a belt 110 wrapped around rollers 120 and 130 to form a continuous loop. At least one of rollers is connected to a driver, such as a motor, for moving the loop in the direction shown. As belt 110 moves, it conveys an object 140, such as a package, in the direction shown. For one embodiment, an encodable strip 150, such as a magnetisable strip, is disposed on an edge 155 of belt 110 along its entire length, i.e., around the entire loop. Encodable strip 150 may be a magnetic tape, for example, similar to magnetic recording tape, of a material similar to that used for magnetic disks and so on. A sensor or read/write head 160 is located at a distance *d1,* for some embodiments, from a surface of encodable strip 150 for sensing encodable strip 150 when a surface of encodable strip 150 is substantially flush with edge 155, as shown in Figure 1B. Alternatively, encodable strip 150 may be embedded within belt 110 with its surface at a distance *d2* from sensor or read/write head 160 such that edge 155 is between sensor or read/write head 160 and encodable strip 150, also shown in Figure 1B.

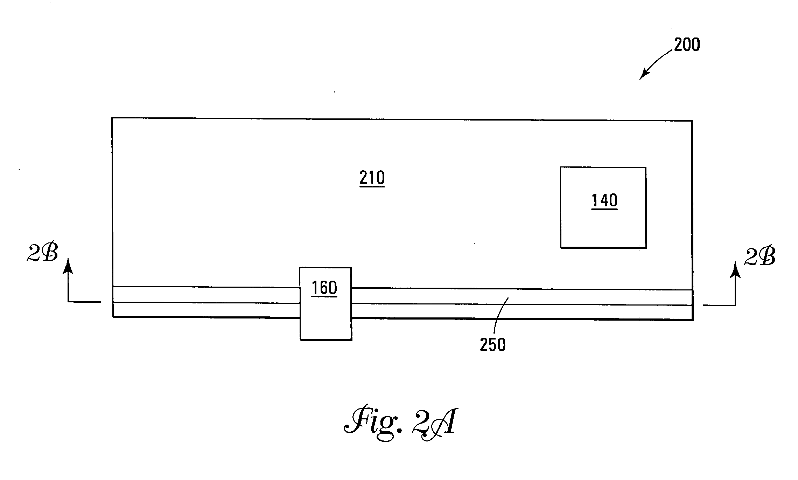

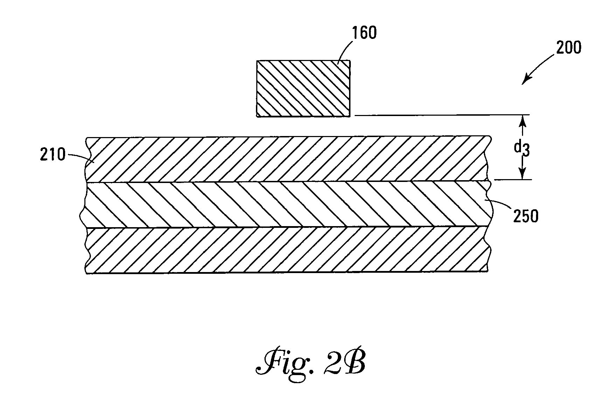

Figure 2A is a top view of a conveyer system 200, according to another embodiment. Conveyer system includes belt 210 wrapped around rollers (not shown in Figure 2A), such as described above, and sensor or read/write head 160 for sensing an encodable strip 250 that in one embodiment is as described above for encodable strip 150. As shown in Figure 2A, encodable strip 250 is disposed in a portion of the belt that carries the object 140. For one embodiment, a surface of encodable strip 250 is substantially flush with a surface of the portion of the belt that carries the object 140. Belt 210 moves past sensor or read/write head 160 during operation. For another embodiment, encodable strip 250 is embedded within belt 210, as shown in Figure 2B, a cross-sectional view taken along line 2B-2B of Figure 2A. For other embodiments, sensor or read/write head 160 is located at a distance *d3* from a surface of encodable strip 250, as shown in Figure 2B.

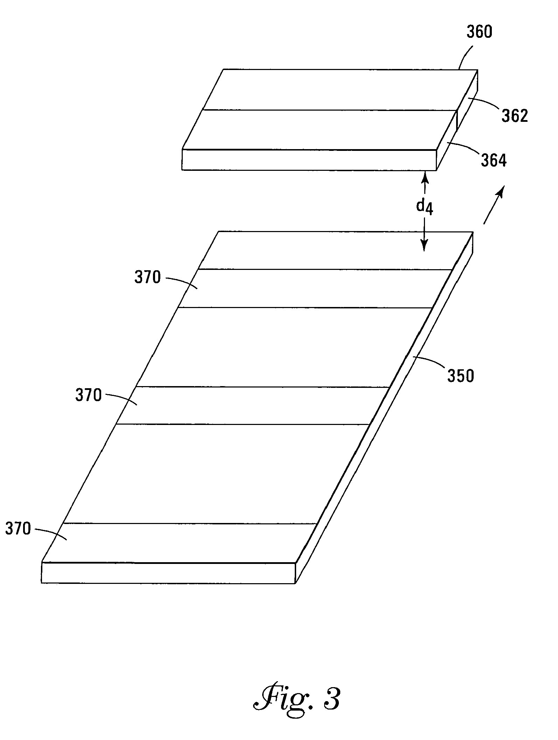

Figure 3 illustrates a portion of an encodable strip 350, e.g., as a portion of a belt of a conveyer system, such as conveyer system 100 or 200, moving past a read/write head 360, according to another embodiment. For one embodiment, read/write head 360 is located at a distance *d4* from a surface of encodable strip 350. Read/write head 360 includes a sensor 362 for sensing the surface of encodable strip 350 and a write head 364 for encoding, re-encoding, and/or erasing encodable strip 350.

For one embodiment, write head 364 is an electromagnet that when energized magnetizes the surface of encodable strip 350 by causing molecular dipoles in encodable strip 350 to orient in generally the same direction. For another embodiment, write head 364 is pulsed, e.g., periodically, to create magnetic (or magnetized) regions 370 on the surface of encodable strip 350, where the frequency of the pulses and the speed of the belt determine, at least in part, the number of the magnetic regions 370 per unit distance on the surface of encodable strip 350, e.g., 150 magnetic regions per inch. For one embodiment, magnetic regions 370 are evenly distributed over encodable strip 350 and thus around the belt loop that includes encodable strip 350. Sensor 362 senses the magnetic regions 370 as they move past sensor 362, enabling the number of magnetic regions 370 to be counted and the distance moved by the belt to be determined. For other embodiments sensor 362 and 364 may be physically separated from each other rather than physically connected, as shown in Figure 3.

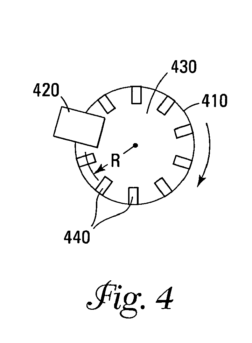

Figure 4 illustrates a roller 410, such as a roller of conveyer system 100, rotating past a sensor or read/write head 420, according to another embodiment. Roller 410 has an encodable surface 430, such as a magnetisable surface, that for one embodiment is created by disposing an encodable material, such as a magnetisable material to roller 410. For one embodiment, encodable surface 430 may be similar to a magnetic disc. For other embodiments, encodable material is disposed on a disc that is connected to roller 410 for rotation therewith. Encodable surface 430 includes magnetic regions 440, e.g., produced by pulsing a write portion of read/write head 420 as encodable surface 430 is rotated past read/write head 420. The angular velocity of 410 of roller 410, a radial distance R at which magnetic regions 440 are located from a centre of either roller 410 or a disc attached thereto, and the frequency of the pulses determine, at least in part, the number of the magnetic regions 370 per unit distance on encodable surface 430, e.g., 150 magnetic regions per inch. The number of magnetic regions 440 per angular distance at the radial distance R enable a distance moved by the belt wrapped around roller 410 to be determined.

For another embodiment, the magnetic regions 370 of Figure 3 or the magnetic regions 440 of Figure 4 may be erased by demagnetizing them using an electromagnetic field generated by read/write head 360 or 420, respectively, to misalign the molecular dipoles of the magnetized regions or by using read/write head 360 or 420, respectively, to heat the magnetic regions to misalign the molecular dipoles. Subsequently, encodable surface of encodable strip 350 of Figure 3 or encodable surface 430 of Figure 4 can be re-encoded as described above using read/write head 360 or 420, respectively. For other embodiments, erasing and re-encoding can be used to field calibrate conveyer systems having a set number of encoder pulses per unit movement to account for system variations.

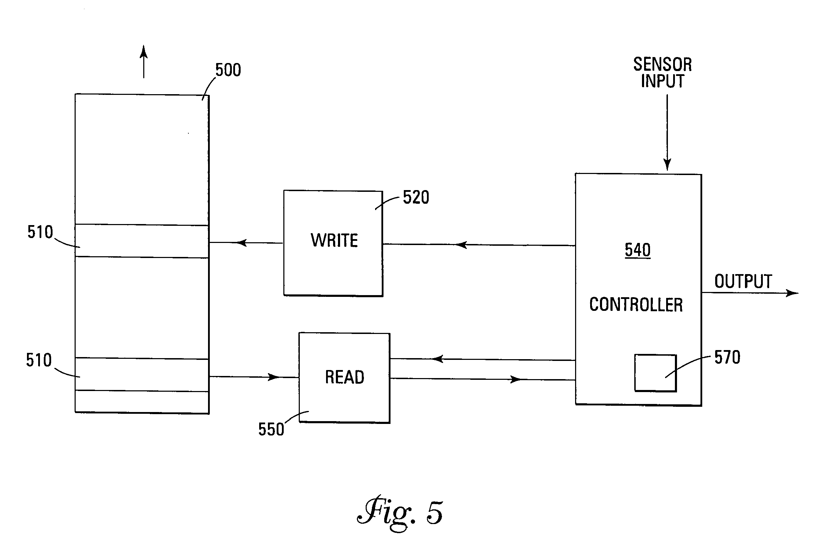

Figure 5 is a block diagram that illustrates a control system for writing and reading an encoded surface 500, such as of a belt or roller of a conveyer system, according to another embodiment. Encoded surface 500 has magnetic regions 510, for one embodiment, that are written thereon by a write head 520 in response to a controller 540. For one embodiment, controller 540 instructs write head to write the magnetic regions 510 on the encoded surface at a particular frequency, e.g., by controlling a rate at which write head emits electromagnetic pulses and/or by controlling the speed of the belt.

As encoded surface 500 moves past a read head 550, read head 550 senses each magnetic region 510 as it moves past read head 550. In turn, read head 550 generates an electronic pulse each time read head 550 senses a magnetic region 510. The electronic pulse is sent to controller 540 that counts the pulses and determines a distance moved by encoded surface 500 and thus a distance moved by a belt that includes encoded surface 500 or the number of rotations of a roller around which the belt is wrapped and to which encoded surface 500 is attached.

For some embodiments, controller 540 instructs read head 550 to start reading magnetic regions 510 or the pulses created thereby in response to a sensor input. The sensor input may be received in response to the corresponding sensor sensing an initial location of an object on the conveyer belt, where the number of pulses between the initial location and a second location where an operation is performed on the object, such as printing on the object or removing the object from the conveyer, is available to controller 540. For one embodiment, controller 540 outputs a signal that causes the operation to be performed on the object at the second location when the controller indicates that read head 550 has read the number of pulses between the initial location and the second location. For some embodiments, controller 540 determines the velocity of the belt by determining the number of pulses per unit time or an acceleration or a deceleration of the belt by determining the change in velocity per unit time, e.g., by the change in the number of pulses per unit time per unit time. In this way, controller 540 can monitor the velocity and/or acceleration/deceleration of the belt and adjust the velocity and or acceleration/deceleration according to predetermined values.

For another embodiment, controller 540 is adapted to perform methods in accordance with embodiments of the present disclosure in response to computer readable instructions. These computer-readable instructions are stored on a computer usable media 570 of controller 540 and may be in the form of software, firmware, or hardware. In a hardware solution, the instructions are hard coded as part of a processor, e.g., an application-specific integrated circuit (ASIC) chip. In a software or firmware solution, the instructions are stored for retrieval by controller 540. Some additional examples of computer-usable media include static or dynamic random access memory (SRAM or DRAM), read-only memory (ROM), electrically-erasable programmable ROM (EEPROM or flash memory), magnetic media and optical media, whether permanent or removable. Many consumer-oriented computer applications are software solutions provided to the user on some removable computer-usable media, such as a compact disc read-only memory (CD-ROM).

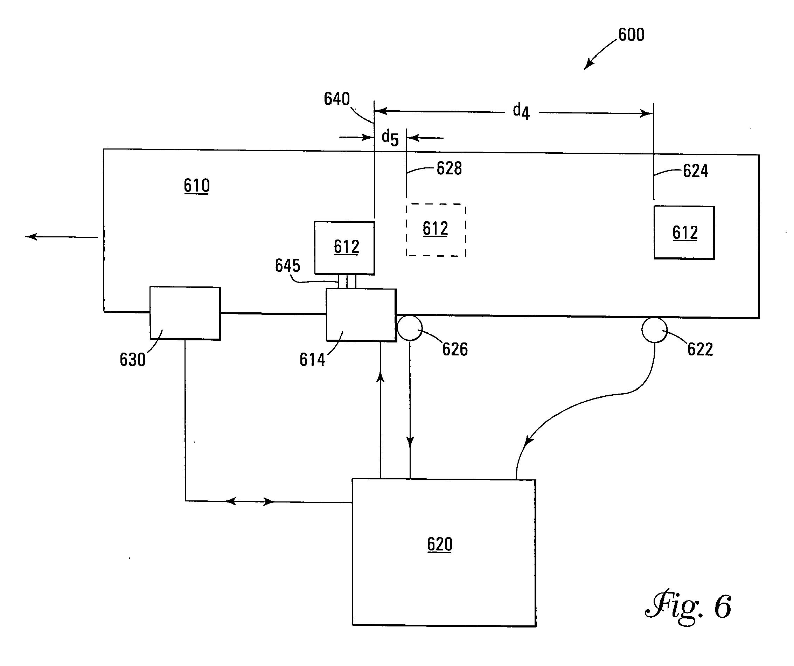

Figure 6 illustrates an imaging system 600, according to another embodiment. A moving belt 610, such as described above, conveys an object 612 past a stationary marking device 614, such as a print head, for depositing an image on object 612 as object 612 moves. A controller 620, e.g., similar to controller 540 described above, is coupled to marking device 614. For another embodiment, controller 620 is also coupled to a first sensor 622 that senses when object 612 is placed on belt 610 at a location 624. Sensor 622 may be an optical sensor, a weight sensor, or the like. For an alternative embodiment, controller 620 is coupled to a second sensor 626, such as an optical sensor, that senses when object 612 is at a location 628, that for one embodiment is where object 612 reaches marking device 614.

Controller 620 is also coupled to a sensor or a read/write head 630 that senses pulses resulting from magnetized regions of belt 610, e.g., contained on an encodable surface of belt 610, such as described above. Alternatively, the encodable surface may be on a roller around which belt 610 is wrapped or on a disc attached directly to that roller, as described above.

For one embodiment, object 612 is positioned on moving belt 610 at location 624, and controller 620 starts counting pulses received from sensor or a read/write head 630 in response to signal received from sensor 622. The number of pulses corresponding to a distance *d4* between location 624 and a location 640 is available to controller 620. When the pulse count is equal to the number of pulses corresponding to the distance *d4*, controller instructs marking device 614 to deposit a marking fluid 645, e.g., ink, on object 612.

For another embodiment, object 612 is positioned on moving belt 610, and controller 620 starts counting pulses received from sensor or a read/write head 630 when object 612 reaches location 628, i.e., when object 612 arrives at marking device 614, in response to signals from sensor 626. The number of pulses corresponding a distance *d5* between location 628 and location 640 is available to controller 620. When the pulse count is equal to the number of pulses corresponding to the distance *d5*, controller instructs marking device 614 to deposit marking fluid 645 on object 612.

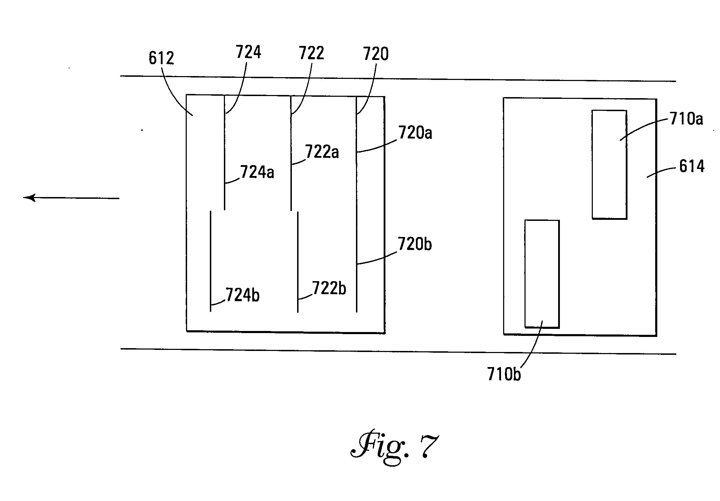

For other embodiments, marking device 614 includes two or more print heads 710 staggered in the direction of motion of object 612, as shown in Figure 7, a side view, according to another embodiment of the disclosure. For one embodiment, each of the two or more staggered print heads are used to create different portions of an image and are activated so that the different portions of the image are intended to create a single image. This is illustrated for lines 720, 722, and 724.

In operation, when object 612 moves past print head 710a, print head 710a prints line segment 720a on object 612. After controller 620 (not shown in Figure 7) counts a predetermined number of pulses received from sensor or a read/write head 630 (not shown in Figure 7) that correspond to a distance between print head 710a and 710b controller 620 instructs print head 710b to print line segment 720b that aligns with line segment 720a, creating line 720. However, errors in the encoded surface can result in the number of pulses corresponding to a distance that is greater than the actual distance between print head 710a and 710b, causing print head 710b to print a line segment 722b too late so that it occurs after line segment 722a resulting in a broken line 722, as shown in Figure 7. Errors in the encoded surface can also result in the number of pulses corresponding to a distance that is greater than the actual distance between print head 710a and 710b, causing print head 710b to print a line segment 724b too early so that it occurs before line segment 724a resulting in a broken line 724, as shown in Figure 7.

Embodiments of the present disclosure enable errors in the encoded surface to be reduced or corrected. For one embodiment, errors in the encoded surface are reduced or corrected by erasing the magnetic portions that make up the encoded surface and re-encoding them using read/write head 630, as described above for read/write heads 360 and 420.

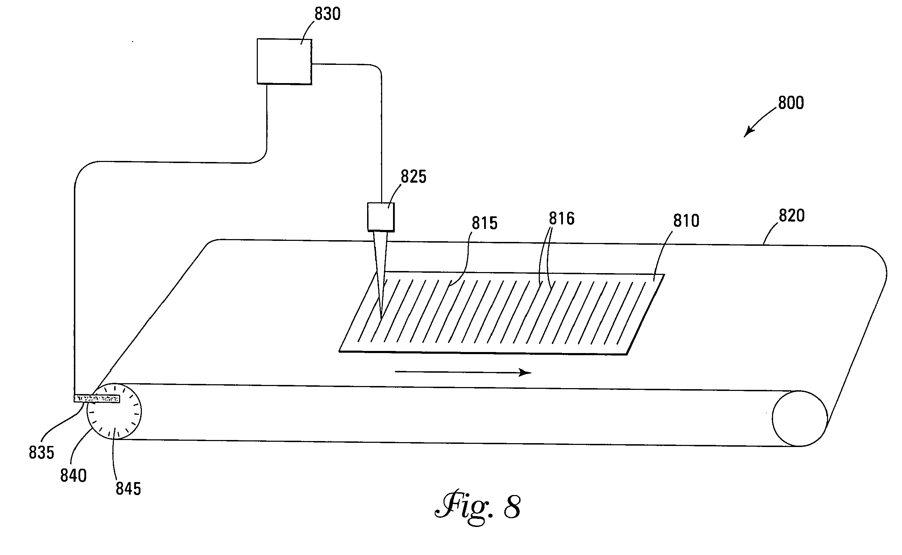

Field calibration can be accomplished by self-calibration, as was shown in Figure 7 and discussed above, where the encoder pulses are delayed or advanced until the lines generated by print heads 710a and 710b become substantially collinear. It is also possible to do an absolute calibration to a reference standard. An example of an absolute calibration is illustrated in Figure 8, according to another embodiment. A calibration standard, such as a precision photo-imaged plate 810, e.g., of glass, with a calibration pattern 815 disposed on its surface is positioned on a movable belt 820 of a conveyer 800. Calibration pattern 815 can be a series of lines 816 separated by a distance equivalent to that of the desired encoder pulse separation. A sensing device 825, such as a reflective beam optical laser sensor, senses calibration pattern 815. As belt 820 moves plate 810 past sensing device 825, sensing device 825 sends a signal (or pulse) each time it senses a line 816, e.g., generated by reflection of the laser from that line 816 to a controller 830, for one embodiment. In response to each signal, controller 830 instructs a write head 835 to write an encoded region 840, corresponding to the sensed line 816 of calibration pattern 815, on an encodable surface 845, e.g., on a roller around which belt 820 wraps or on a disk attached directly to the roller. For one embodiment, encodable surface 845 is magnetisable, and write head 835 magnetizes a region of encodable surface 845 for each line 816 of calibration pattern 815.

Although specific embodiments have been illustrated and described herein it is manifestly intended that the scope of the claimed subject matter be limited only by the following claims.

The disclosures in United States patent application number 11/041,782, from which this application claims priority, and in the abstract accompanying this application are incorporated herein by reference.

## Claims

1. A conveyer including:
a belt (110, 210, 820); and
an encoded surface (430, 500, 845) that moves with the belt (110, 210, 820) and that can be re-encoded.

2. A conveyer according to claim 1, wherein the encoded surface (430, 500, 845) comprises a plurality of encoded regions (370, 440, 510, 840).

3. A conveyer according to claim 2, wherein each encoded region (370, 440, 510, 840) is a magnetized region.

4. A conveyer according to any preceding claim, wherein the encoded surface (430, 500, 845) is disposed on the belt (110, 210, 820), disposed on a roller (410) of the conveyer around which the belt (110, 210, 820) is wrapped, or disposed on a disc (410) connected to the roller.

5. A conveyer according to any preceding claim, including a sensor (160, 362, 420, 630) for sensing the encoded surface (430, 500, 845).

6. A conveyer according to claim 5, including a controller (540, 620) coupled to the sensor (160, 362, 420, 630).

7. A conveyer according to claim 6, including a write head (364, 520, 835) coupled to the controller (540, 620) adapted to encode, erase, and/or re-encode the encoded surface (430, 500, 845).

8. A conveyer according to any preceding claim, wherein the conveyer (100, 200, 800) is part of an imaging system (600).

9. A method of re-encoding a conveyer (100, 200, 800), including the steps of:
erasing an encoded surface (430, 500, 845) that moves with a belt (110, 210, 820) of the conveyer (100, 200, 800); and
forming encoded regions (370, 440, 510, 840) on the surface (430, 500, 845) as the surface (430, 500, 845) moves with the belt (110, 210, 820).

10. A method according to claim 9, wherein erasing an encoded surface (430, 500, 845) comprises demagnetizing the encoded surface (430, 500, 845).

11. A method according to one of claims 8 to 10, wherein forming encoded regions (370, 440, 510, 840) on the surface (430, 500, 845) comprises magnetizing the regions (370, 440, 510, 840).

12. A method according to any one of claims 8 to 11, wherein the encoded surface (430, 500, 845) is disposed on the belt (110, 210, 820), disposed on a roller (410) of the conveyer around which the belt (110, 210, 820) is wrapped, or disposed on a disc (410) connected to the roller.

13. A method according to one of claims 8 to 12, wherein the belt (110, 210, 820) conveys an object (140, 612) past a stationary marking device (614) adapted to deposit an image on the object (140, 612) and wherein forming encoded regions (370, 440, 510, 840) on the surface (430, 500, 845) acts to align at least first (720a, 722a 744a), and second (720b, 722b 744b) portions of the image respectively printed by at least first (710a) and second (710b) print heads of the marking device (614) that are staggered with respect to each other.

14. A method according to any one of claims 8 to 13, wherein the conveyer (100, 200, 800) is part of an imaging system (600).

15. A method of calibrating a conveyer encoder, including:
sensing elements (816) of a calibration pattern (815) disposed on a belt (820) of the conveyer (800) on which the calibration pattern (815) moves; and
forming an encoded region (840) for each sensed element (816) on an encodable surface (845) that moves with the belt (820).

16. A method according to claim 15, wherein forming an encoded region (840) comprises magnetizing the region.

17. A method according to any one of claims 13 to 16, wherein the encodable surface (845) is disposed on a roller of the conveyer (800) around which the belt (820) is wrapped or disposed on a disc connected to the roller.

18. A method according to any one of claims 15 to 17, wherein the conveyer (800) is part of an imaging system (600).
